Europäisches Patentamt

(19) European Patent Office

Office européen des brevets

(11) Publication number: **0 248 919**
**B1**

(12) **EUROPEAN PATENT SPECIFICATION**

(45) Date of publication of the patent specification:
08.03.89

(51) Int. Cl.⁴: **G06F 15/72**

(21) Application number: **86107786.5**

(22) Date of filing: **07.06.86**

(54) Method for generating representations of 3-dimensional objects and system performing this method.

(43) Date of publication of application:
**16.12.87 Bulletin 87/51**

(45) Publication of the grant of the patent:
**08.03.89 Bulletin 89/10**

(84) Designated Contracting States:
**DE FR GB IT**

(56) References cited:
DATA REPORT, vol. 11, no. 2, June 1983, pages 22-27, Miesbach, DE; R. DENNER et al.: "A new dimension in design and planning"
ENGINEERING, vol. 224, no. 1, January 1984, pages I-IV, London, GB; K. NICHOLS: "3D modelling for CAD/CAM", part 2
ENGINEERING, vol. 220, no. 10, October 1980, pages 1104-1108, London, GB; "Designing"

(73) Proprietor: Hewlett-Packard GmbH, Herrenberger Strasse 110, D-7030 Böblingen(DE)

(72) Inventor: Diebel, Heinz, Dipl. Ing., Strassburger Strasse 21, D-7030 Böblingen(DE)
Inventor: Peterhoff, Ralf, Dipl. Ing., Schaichhofstrasse 7, D-7039 Weil i. Schönbuch(DE)
Inventor: Thümling, Evelyn, Dipl. Inform., Wengertsteige 46, D-7038 Holzgerlingen(DE)

(74) Representative: Schulte, Knud, Dipl.-Ing., c/o Hewlett-Packard GmbH Europ. Patent- und Lizenzabteilung Postfach 1430 Herrenberger Strasse 130, D-7030 Böblingen(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for generating representations of 3-dimensional objects, especially models of mechanical parts, in a computer aided design system and to a system with which this method can be performed.

Computer aided design systems as they are known in the art (see e.g. DATA REPORT, vol. 11, no. 2, June 1983, pages 22–27) can generally be of two types: The first type is the so-called 2D-system, which performs all its functions on the basis of 2-dimensional geometry and the second type — called 3D-system – is based on a 3-dimensional geometry.

The systems based on a 3-dimensional geometry (3D-systems) establish a better control over all aspects of geometry than 2D-systems, including topological checks in the 3-dimensional space. They also support perspectives, hidden lines, shaded views and manipulation of the computer model. Unfortunately, they have several disadvantages, which shall be discussed hereinafter.

3D-systems, as they are known in the art (see e.g. ENGINEERING, vol. 220, no. 10, Oct. 80, pages 1104–1108), can be based on three fundamental principles:

The first is the so-called 3D wire frame system. In such a system, the 3-dimensional geometry of an object is described only in lines defining the edges of this object. This ensures a compact data structure and a fast system response time. On the other hand, in such a system topological checks are incomplete and therefore an invalid geometry can be defined.

The second known system is the 3D surface system. This system is primarily based on the wire frame system, but additionally handles information concerning the surfaces of the described objects. This system offers some additional features but – as in the wire frame system – the 3-dimensional topological check is incomplete so that invalid structures can be defined. In the 3D surface system as well as in the 3D wire frame system the complexity of the described topology is limited.

The third known 3D-system is called "solid modeling system". This system uses very complex algorithms, but offers a lot of features. In particular, it includes complete topological checks in the 3-dimensional space, so that always a valid geometry can be guaranteed. This leads to very time-consuming procedures, especially when checking the 3D-topology of an object. Large system response times are the result.

A major objective of the present invention is to improve and simplify user interaction with a computer aided design system while retaining all advantages of the known 3D-systems.

The invention uses a computer aided design system comprising a processor connected via appropriate registers with at least one user input interface (preferably a keyboard and/or a graphics tablet) and one user output interface (preferably a screen with graphics capabilities). In such a system, in a 2D mode, the processor only accepts and processes commands relating to the 2D-geometry of an object in a given plane whilst having access to a 2D read/write memory, said 2D mode being performed under control of the instructions contained in a 2D-instruction memory;

whenever a command is entered relating to the 3D geometry of said object while the processor operates in said 2D mode, control is transferred to a transformation instruction memory, and the processor will then execute the instructions contained in this memory which implements the following steps:

said 2D geometry is transformed into a corresponding 3D geometry; and

control is then transferred to a 3D-instruction memory, and the processor will then execute the instructions contained in this memory to process and/or store said 3D geometry whilst having access to a 3D-read/write memory.

The present invention makes use of the fact that computer aided design systems using a 2-dimensional geometry (which are known in the art since a long time) have – besides all their disadvantages – the major advantage that they are relativly easy to use, especially with respect to their limited command set. 2D systems also have a very fast system response time as no complex procedures have to be performed in the 3-dimensional space.

The invention uses specific elements, both of the known 2D and 3D systems, while keeping their advantages and avoiding the disadvantages. This will be described in detail now.

According to the invention, in the 2D mode the design procedures are performed under control of the instructions contained in a specific memory, herein called 2D-instruction memory. The processor executes the instructions contained in this memory. In 2D mode, the user interacts with the system in the same manner as he does with a 2D system. In particular, only commands and data can be entered which relate to the 2D geometry of a specific plane which hereinafter will be called "work plane". This work plane is preferably shown on a graphics device such as a CRT (hereinafter referred to as user output interface).

Using this 2D mode has several advantages. For example, instructions of an existing 2D system can be stored in the 2D-instruction memory so that no new instructions have to be developed or even an existing 2D instruction memory can be used. If the user is just experienced with 2D systems, it is very easy for him to get familiar with the new system as he needs not learn new commands or procedures.

Another advantage of the sytem according to the invention is that, in 2D mode, all functions and procedures such as storing the geometry in the 2D-read/write memory, retrieving this geometry and the like can be performed on a 2D basis which results – as these functions are much easier in 2D mode than in 3D mode – in a very fast system response time.

Therefore, while in 2D mode the system according to the present invention looks and behaves like a 2D system at the user interface.

But in contrast to a real 2D system, the user can enter commands affecting the 3D geometry of the component he wants to create. For example, he can enter a command to create a solid object from a 2D profile by an extrusion operation. Other operations affecting the 3D geometry of the object could be to mill a hole of a given 2D profile or to stamp 2D profiles through existing 3D objects. Such an operation cannot be performed in the "work plane" under control of the 2D-instruction memory. In this case, control is transferred to the transformation instruction memory. The system processor now executes the instructions contained in this memory. This instructions cause the following operations:
First, the 2D geometry defined in 2D mode is transformed into a corresponding 3D geometry; and
second, control is then transferred to the 3D-instruction memory.

In a preferred embodiment, the object defined in 2D is additionally checked with respect to its geometry; this procedure is called topological check and, for example, ensures that no intersections or branches of geometric components can occur.

In existing 3D systems, the topological check is either incomplete like in the wire frame system or the surface system, so that invalid geometries can result, whereas in the solid modeling system the topological check is rather time-consuming. The present invention avoids both disadvantages: With respect to the wire frame system or the surface system, the topological check according to the present invention is complete as it can be ensured that no invalid geometries can be defined; and with respect to the solid modeling system, the topological check according to the invention is not so time-consuming as it is only performed when a command relating to 3D geometry is entered and not – as the solid modeling system does - any time the user has added a new geometric element to the object. Furthermore, the topological check according to the present invention can be performed on a 2D basis; e.g., even after a check in 2D it can be ensured that no invalid geometries in 3D can be defined. This results in an easier and quicker topological check – even if performed - in comparison with the solid modeling system.

When – in the above mentioned case – the transformation instruction memory has completed the necessary transformation, it passes control to the 3D-instruction memory. In this case the processor executes the instructions contained in the 3D instruction memory; in particular, it stores said 3D geometry in a 3D-read/write memory. Afterwards, control is transferred to the 2D-instruction memory again, under control of which the user can continue to enter commands.

Thus, in a system according to the invention 3D operations are only performed if they are absolutely necessary. In all other cases, operation is reduced to the 2-dimensional work plane.

In a preferred embodiment the user additionally has the opportunity to select a multiplicity of views on the user output interface. Whenever control is transferred to the 3D-instruction memory, the instructions contained therein cause the processor to create a 3-dimensional view and to store this view in the 2D-read/write memory. In similar manner, views in two-dimensional planes not corresponding to the work plane (for example, with an angle of 90° to this work plane) can be created under control of the 3D-instruction memory and stored in the 2D-read/write memory. When the user has selected specific views, these are shown on the user output interface by access to the 2D-read/write memory. In this case, the views are only updated each time control is transferred to the 3D-instruction memory by the transformation instruction memory.

Of course, if in 3D mode views of other planes are created, these planes can be defined by the user as new work planes even for use in 2D mode. Additionally, the user can define its own new work plane which may have angles of any degrees with reference to the original coordinate system. This is very useful if a component has partially a sloping surface; in this case, the sloping surface can be defined as the new work plane, and all functions and operations can be performed on this surface in 2D mode.

In another preferred embodiment, the user can directly access the 3D-instruction memory by entering an appropriate command. This may be useful, for example, to call up pre-defined objects, such as blocks, cones, cubes, cylinders or spheres. A direct access to the 3D-instruction memory additionally may enable other operations like Boolean operations (which, for example, form the union of two existing objects). Even direct modification of the object in 3D mode could be possible.

It is understood that, according to the invention, the instructions stored in the 3D-instruction memory can be based on all types of known 3D systems such as the wire frame system, the surface system and the solid modeling system (although the latter is the preferred one).

In the accompanying drawings, a preferred embodiment of the present invention is shown. More features and advantages of the invention can be recognized from the following description in which these drawings are explained as well as the invention is described.

In the drawings,

Figure 1 shows the overall configuration of a computer aided design system schematically,
Figure 2 shows an example of a screen image,
Figure 3 shows a detailed diagram of the whole system,
Figure 4 shows a detail of Figure 3,
Figure 5 is a flow chart showing the operation of the processor and
Figures 6 to 11 show an example of the creation of a 3-dimensional object using this system.

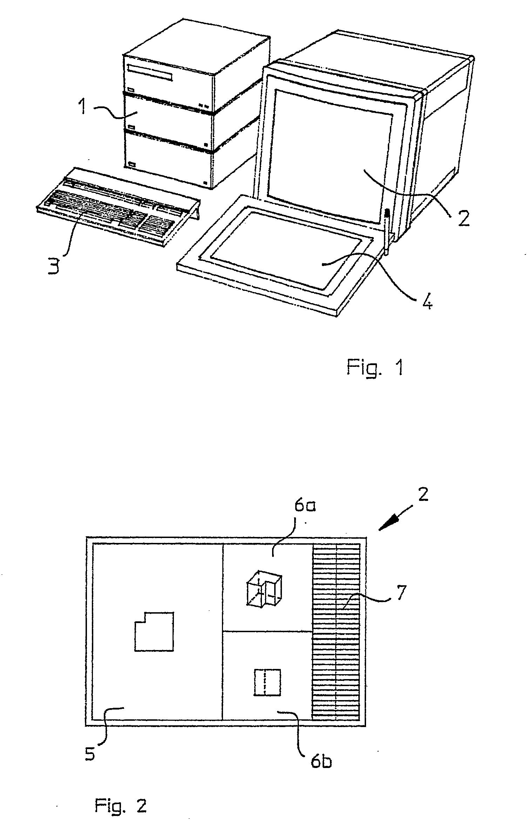

Referring to Figure 1, there is shown a computer 1 which, for example, may be a process computer. This computer is connected with a screen 2 which has graphics capabilities to display representations of the created objects (e.g., this screen could be a cathode ray tube and preferably it is a high resolution color graphics screen). The computer is also connected with keyboard 3 which, for example, is used to enter alphanumeric text or numerical dimensions. Computer 1 is further connected with a graphics tablet 4 for entering geometric structures and – as will be explained later – commands. It is understood that the commands could also be entered via keyboard 3 and/or that graphics tablet 4 could be replaced by a "mouse", a light pen or the like.

In Figure 2 there is shown an example of a display as it can be created on the (substantially flat) screen 2. The plane in which the user edits his objects is called "work plane"; the representation of this work plane is labeled with 5. Area 5 shows the actual 2D plane and the geometric structure defined therein by the user in 2D mode. In other words, an input and any definition is performed by the user in this plane.

There are two additional view areas labeled 6a and 6b. In these areas, the user can select other 2D-views of the object (shown in area 6b) or perspective views of the object (shown in area 6a). As will be explained later, these views are only created/updated if the 3D mode is accessed. An area 7 serves as command input area. By moving a pencil to an appropriate area on the graphics tablet 4, the user can select a command offered to him on command input area 7.

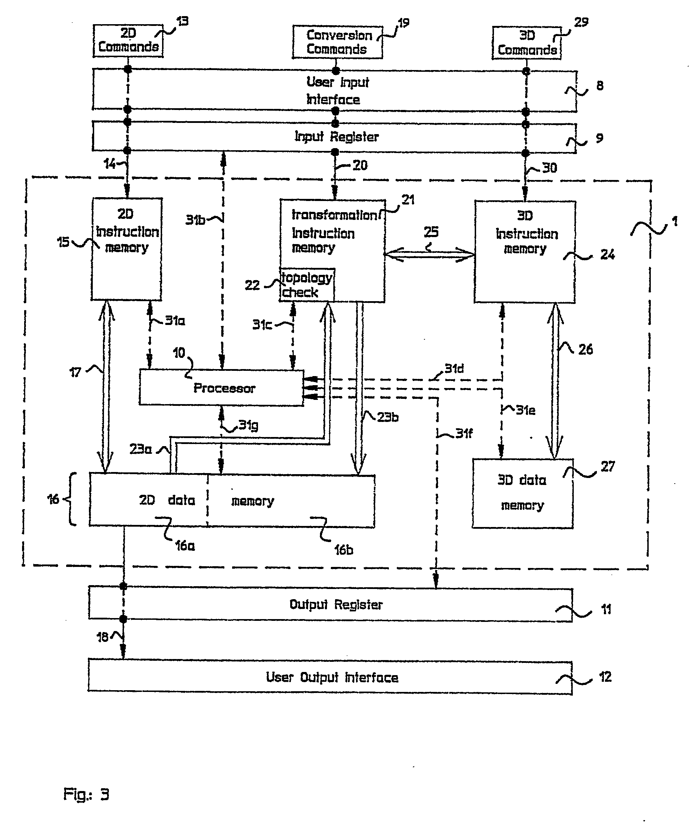

According to Figure 3, there is shown schematically a user input interface 8. This interface includes all components which allow communication from the user to the system; for example and with reference to Figure 1, this interface includes keyboard 3 and graphics tablet 4. Other representations of this interface such as a mouse or a light pen are possible.

Interface 8 is used for any inputs the user wants to make, especially command inputs concerning the geometry of the object to be defined. As will be explained later, these commands generally can be divided in three types of commands. The commands are transferred via an input register 9 to a processor 10.

The processor 10 is – as well as some other components which will be discussed later – part of the computer 1 (cf. Figure 1), which is indicated by a dashed line in Fig. 3.

On the other hand, the system is also equipped with an output register 11 which is connected with a user output interface 12. This output interface is used to transmit information from the system to the user. With reference to Figure 1, such a user output interface could be represented by screen 2.

The system itself generally includes three paths of processing. When a command is entered relating to the two-dimensional geometry of an object (called "2D command" and represented by block 13) via path 14 to the system, control is transferred to a 2D instruction memory 15. Processor 10 now executes the instructions contained in this memory. In this mode of operation, all procedures relating to geometry are processed in a two-dimensional plane defined by the user and called "work plane". The instructions contained in the 2D-instruction memory 15 can be, for example, instructions as they are just known from 2D CAD-systems.

Processing commands and instructions in 2D mode has the advantage of easy user control and fast system response. This fast response time is caused by easy 2D processing.

While in 2D mode, any information about the geometry of the object is stored to and retrieved from a 2D data memory 16. This is indicated by connection line 17. 2D data memory 16 comprises two parts 16a and 16b. Part 16a contains geometric information which can be modified by the user, whereas the user has no direct access to part 16b.

Any geometric information created in 2D mode is stored in part 16a of 2D data memory 16 so that the user has full control over the information stored therein. Any information to be displayed or shown to the user is transmitted via output register 11 to the user output interface 12 as shown by path 18.

There is a second type of input commands called "conversion commands" and indicated by block 19. Commands of this type affect the three-dimensional geometry of the object and could be, for example, commands to stamp a 2D profile through an existing 3D object, to mill (remove parts of an existing 3D object similar to a "mill" operation using 2D profiles), to create a solid object from a 2D profile by an extrusion operation or by rotating it round an axis outside the 2D profile, or the like. Whenever such a command is entered to the system on path 20, control is transferred to a transformation instruction memory 21. This transformation instruction memory receives geometric information of the object from part 16a of 2D data memory 16 has indicated by path 23a. The transformation instruction memory contains instructions for a topological check as indicated by reference numeral 22. Under control of these instructions, the object is checked upon its geometric completeness. This check can be performed on a 2D basis as the validity of the geometry even in 3D can be guaranteed if the 2D topological check is passed and if a valid conversion procedure is performed on the 2D profile.

Then the 2D profile is transformed in a 3D object according to the entered conversion command. After completing the transformation, control is transferred to a 3D instruction memory 24 as indicated by numeral 25. This 3D instruction memory has access (as indicated by 26) to a 3D data memory 27 in which all information concerning the three-dimensional geometry of the object is stored and retrieved therefrom. All procedures related to the three-dimensional geometry are executed under control of the 3D instruction memory 24. From the 3D data memory 27, perspective views of the object can be created and stored in part 16b of 2D data memory 16. For this purpose, control is retransferred to transformation instruction memory 21 which has access to part 16b of 2D data memory as indicated by numeral 23b. The 3D geometry information can also be used to create two-dimensional views of the object in planes other than the current work plane. In this case, control is also transferred in the reverse way from the 3D instruction memory 24 to transformation instruction memory 21 which creates said two-dimensional view and stores it in part 16b (to which the user has no write access) of the 2D data memory 16.

The 2D topological check performed whenever a 2D profile has to be transformed in a 3D object has the advantage that it is based only on a 2D geometry. Therefore, the check is easier and less time consuming than a full 3D check. Furthermore, it only has to be performed when control is transferred to transformation instruction memory 21 and not any time the user adds new geometric elements as in existing 3D systems.

As just indicated, the "work plane" definition is under the responsibility of the user. Of course, this definition can be changed during the design procedure (for example, a two-dimensional view shown in area 6b of Figure 2 can be defined to be the new "work plane" so that editing in this plane becomes possible). A very important feature of the system according to the invention is that sloping or even curved surfaces can be defined to be a "work plane" so that 2D inputs are also possible with reference to this sloping/curved plane.

The system also offers the opportunity to enter commands related directly to 3D geometry, called "3D commands" and indicated by block 29 and path 30. These commands comprise, for example, the retrieval of "primitives" (geometric objects such as a block, a cone, a cube, a cylinder or a sphere) just stored in the system, Boolean operations (such as the union) of existing 3D objects or the like. In this case, as indicated, control is transferred directly to the 3D instruction memory 24 which has access to 3D data memory 27.

It is understood that either operation performed by the system is done under control of processor 10 which has (as indicated by numerals 31a to 31g) access to all memories and registers.

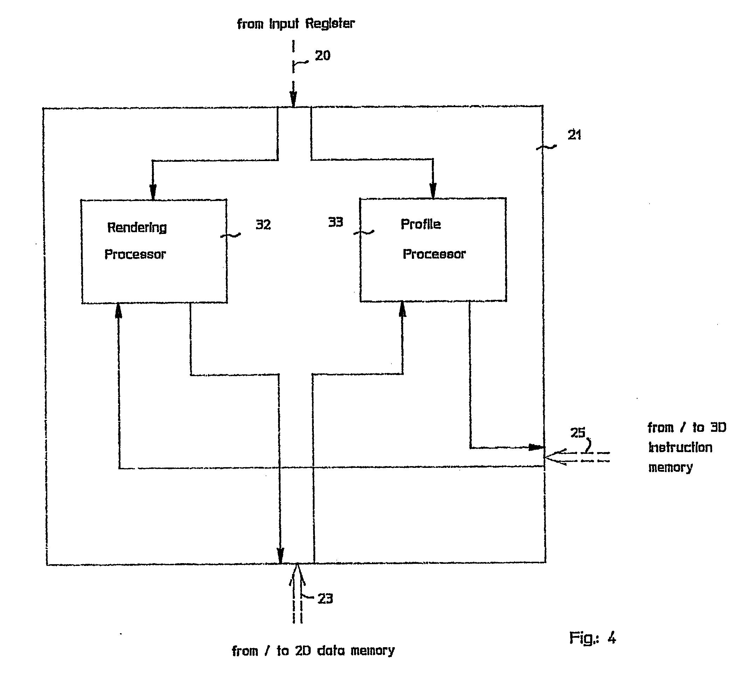

Figure 4 shows the transformation instruction memory 21 in more detail. The transformation instruction memory comprises a set of instructions called rendering processor 32 and another set of instructions called profile processor 33. The profile processor is responsible (as indicated by the direction of the arrows) for the transformation of a 2D profile into a 3D object (including the topology check) whereas the rendering processor retrieves 3D geometry information and creates a 2-dimensional view of other planes than the "work plane" as indicated by area 6b of Figure 2. Thus, the transformation instruction memory 21 operates in a bi-directional manner (in general, transformation from 2D to 3D and vice versa).

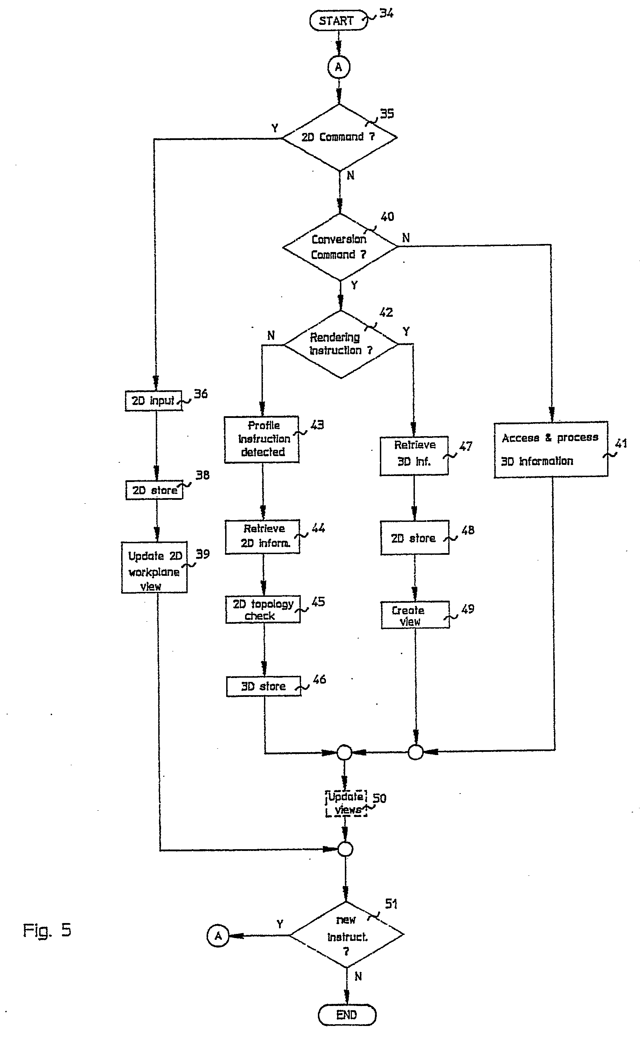

Figure 5 is a general flow chart of processor operation. If the user enters a command, the system starts its operation at label "START" (34). First of all, it checks whether the entered command is a command relating to 2D geometry or not (reference numeral 35). If the entered command is a 2D command, the system accepts it as a 2D input 36 and stores the related information to the 2D data memory (reference numeral 38). Then the system updates the 2D work plane shown on the user output interface (compare area 5 in Figure 2). This updating is indicated by numeral 39.

If the entered command is not a 2D command, the system further checks whether this command is a conversion command or not (check 40). If no, the command is directly related to 3D geometry (compare numeral 29 of Figure 3), and 3D information is directly accessed and processed (see 41). If yes, the system has to decide whether the entered command is a rendering instruction or not (check 42). If no, control is transferred to profile processor 33 of Figure 4 (reference numeral 43), 2D information is retrieved from the 2D data memory (44), this geometry information is checked with reference to its 2D topology (45) and the obtained geometry is then stored to the 3D data memory under control of the 3D instruction memory as indicated by 46. If yes, control is transferred to the rendering processor 32 of Figure 4, 3D geometry information is retrieved from 3D data memory as indicated by 47, this information is transformed into a 2D view and stored in the 2D memory (reference numeral 48) and a view is created (49).

In any case, if a conversion command was detected, the views (as shown in areas 6a and 6b of Figure 2) are updated as indicated by 50. This view update is only performed if a conversion command or a 3D command was entered, but not in the case of a 2D procedure.

After decoding and processing the command, the system either waits for a new instruction (numeral 51), in which case operation starts again and label "A", or system operation is stopped as indicated by label "END".

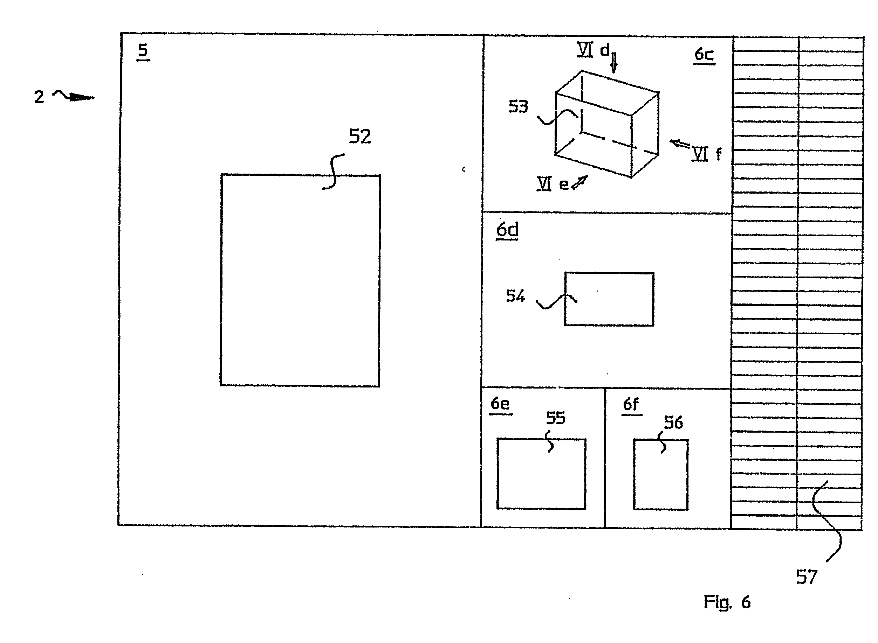

Figures 6 to 11 show an example of the creation of an object with the new system. According to Figure 6, there is shown the screen 2 which is devided into several parts. In area 5 the user can define a 2-dimensional geometry according to the present work plane. In the shown example, a rectangle 52 has been defined. After having defined this structure in 2D mode, the user had initiated a LIFT operation. The command "LIFT" is a conversion command, which passes control to the transformation instruction memory. Under control of this memory, rectangle 52 as shown in the work plane was checked upon topological errors in its 2D geometry (which check ensures that also the corresponding 3D geometry is valid) and then a transformation was performed into 3D as a result of which the internal representation of a parallelepiped block was created.

According to the shown display the user has defined a mulitplicity of views in areas labeled 6c to 6f (these view areas correspond to areas 6e and 6b of Figure 2). Under control of the transformation instruction memory these views were stored in area 6b of 2D data memory 16 and shown on the screen.

In area 6c a perspective view of the parallelepiped block internally defined is shown. This block is labeled 53. In areas 6d to 6f 2-dimensional outside views 54 to 56 of the created block are shown. The view directions are indicated at block 53 by reference numerals VId to VIf.

A special area 57 of the screen serves as command input area. On this area, the user can select different commands by moving a pen to an appropriate position on his graphics tablet. This operation needs not be described in detail as it is well known in the art.

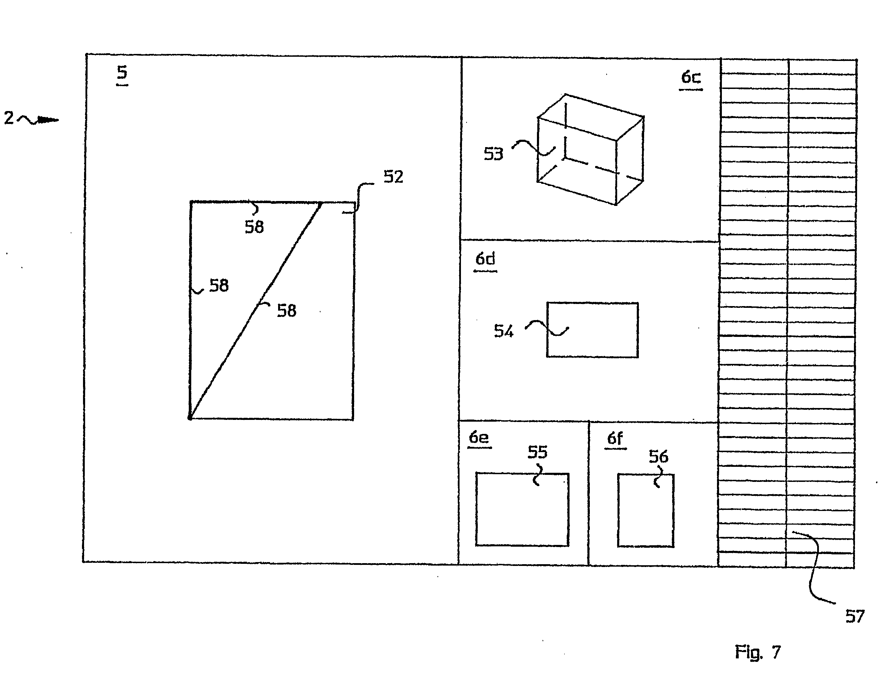

According to Figure 7, the user has added triangle 58 to the structure in the work plane. This operation is performed in 2D mode under control of the 2D instruction memory; therefore, views 6c to 6f are not changed as neither the transformation instruction memory nor the 3D instruction memory control this operation.

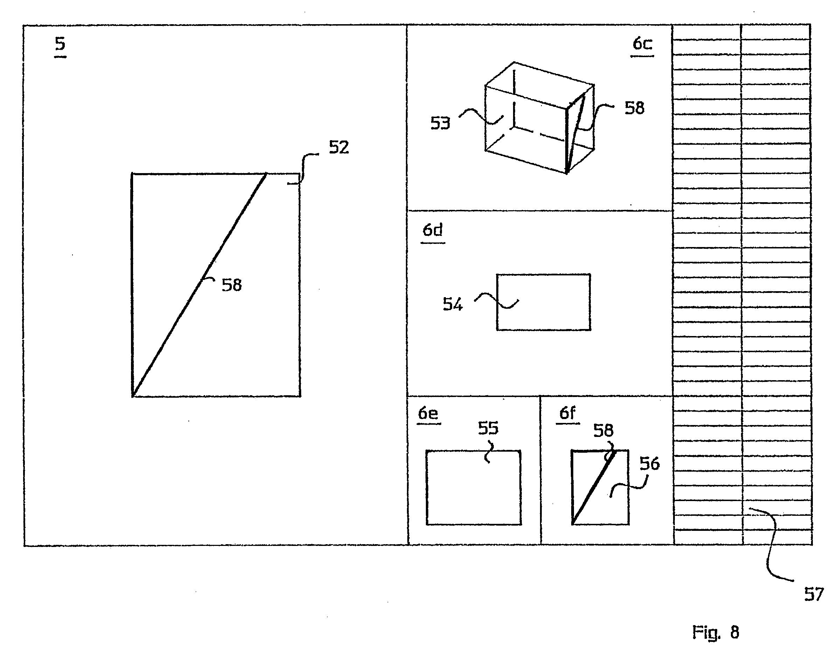

After having defined triangle 58, the user initiates a MILL operation. This MILL operation is a conversion command which causes the system to perform a topological check on the 2D geometry defined in the work plane. After having passed this check, the 2D geometry is transformed in a 3D geometry under control of the transformation instruction memory. The obtained 3D information is handled by the 3D instruction memory and stored in the 3D data memory. After this operation, the views are updated and restored in the 2D data memory. The changes affecting the 3D geometry can now be seen in the views in areas 6c to 6f as shown in Figure 8. In views 6c to 6f of this Figure, line 58 is also labeled.

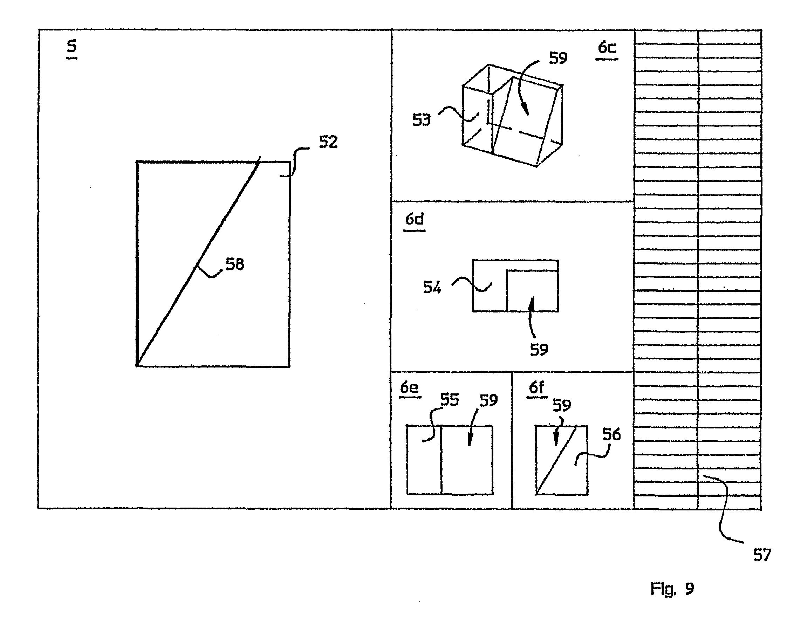

After performing this operation, the system asks the user for the depth of MILL operation. After having entered this depth via the keyboard, the system performs the MILL operation in 3D. Then it updates the views as can be seen in Figure 9. The views in this Figure show the result of the MILL operation as an outbreak 59.

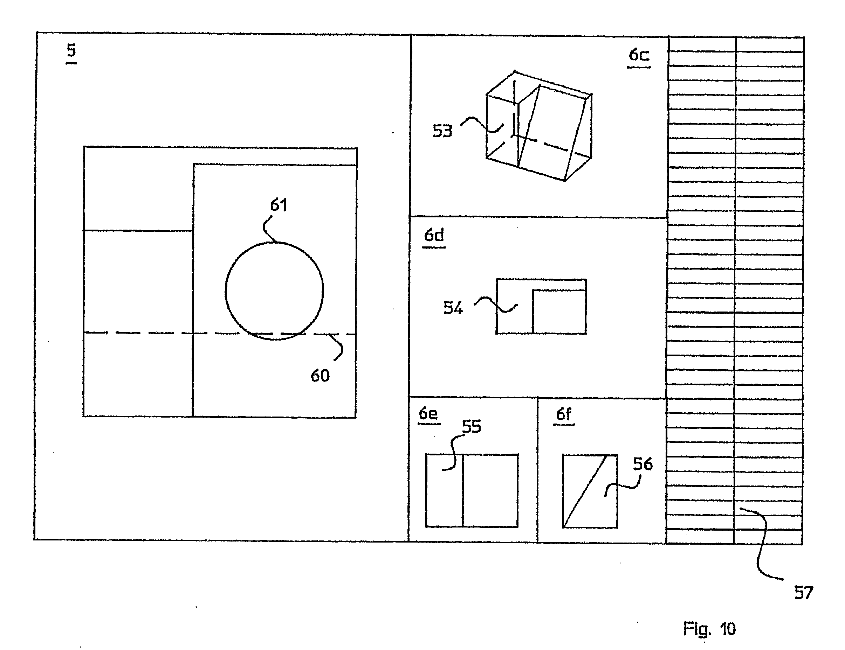

Having performed the MILL operation, the user now wants to drill a hole in the sloping plane of the created block. In known systems, this operation is very difficult to proceed and very time consuming with respect to processor time. It shall be explained now – with reference to Figure 10 – how easy this drilling can be performed in the system according to the invention.

First of all, the user defines the sloping plane of the outbreak to be the new work plane. This new work plane is shown in area 5 of Figure 10. In this work plane representation, dashed line 60 represents one of the lower edges of the block. Views 6c to 6f remain unchanged.

Then the user defines a circle on the sloping plane which now lies in the work plane. This circle is indicated by 61. As the definition of said circle is performed in 2D mode, views 6c to 6f are not affected.

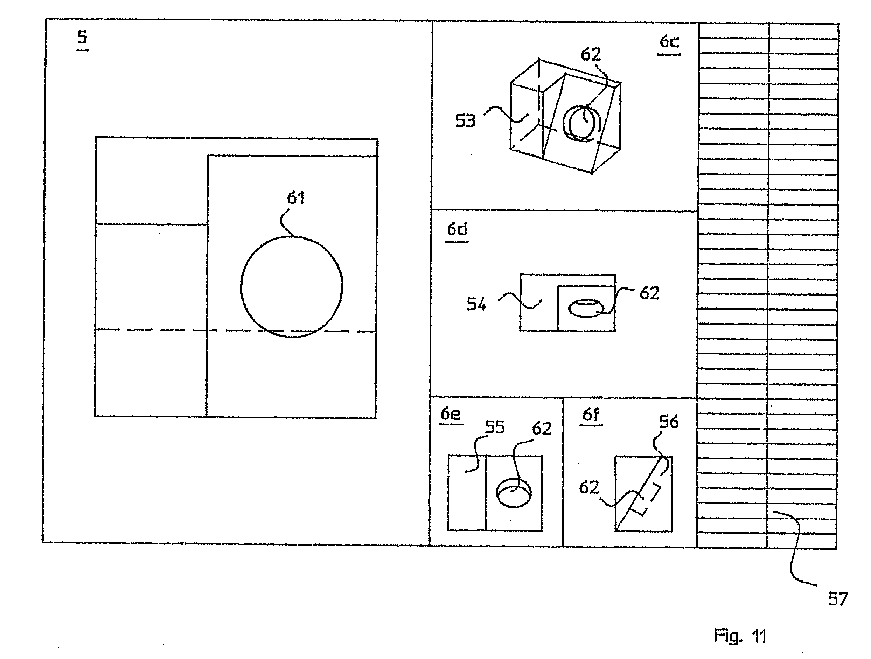

After having defined circle 61, the views again enters a MILL command. The step of defining the depth of the MILL operation is skipped here. The MILL operation results in a hole the axis of which is right-angled to the sloping surface of the block. The created hole is labeled 62 and can be seen best on the perspective view of area 6c, but also on the other view areas in Fig. 11; in view 6f, hole 62 is only represented by a hidden line as it cannot be seen from the outside in this view.

It should be noted that only in the work plane circle 61 looks like a real circle; in all other views, it looks more or less like an ellipse.

## Claims

1. Method for generating representations of 3-dimensional objects, especially models of mechanical parts, in a computer aided design system, said system comprising a processor (10) connected with at least one user input interface (8) and one user output interface (12) via appropriate registers (9,11), characterized in that

   a) in a 2D mode, the processor (10) only accepts and processes commands relating to the 2D geometry of an object in a given plane whilst having access to a 2D read/write memory (16), said 2D mode being performed under control of the instructions contained in a 2D-instruction memory (15);

   b) whenever a command is entered relating to the 3D geometry of said object while the processor (10) operates in said 2D mode, control is transferred to a transformation instruction memory (21, 22), and the processor (10) will then execute the instructions contained in this memory (21, 22) which implement the following steps:

      b1) said 2D geometry is transformed into a corresponding 3D geometry; and b2) control is then transferred to a 3D-instruction memory (24), and the processor (10) will then execute the instructions contained in this memory (24) to process and/or store said 3D geometry whilst having access to a 3D-read/write memory (27).

2. Method according to claim 1, characterized in that the geometry of said object is checked with respect to topological errors any time the 2D geometry is transformed into a 3D geometry, preferably under control of said transformation instruction memory (21, 22).

3. Method according to claim 1 or claim 2, characterized in that under control of said 3D-instruction memory (24), the created object may be modified in its characteristics related to its 3-dimensional representation, preferably by adding/subtracting predefined geometric objects or performing Boolean operations.

4. Method according to at least one of the preceding claims in which the user can select a multiplicity of views on said user output interface, characterized in that all of these views are updated any time control is transferred to said 3D-instruction memory (24) or a special command is entered by the user.

5. Computer aided design system comprising:

   a) at least one user input interface (8), preferably a keyboard (3) and/or a graphics tablet (4);

   b) a digital processor (10) connected to said user input interface via an input register (9);

   c) at least one user output interface (12), preferably a screen (2) with graphics capabilities, said user output interface being connected to said digital processor via an output register (11);

   characterized in that said digital processor is connected with

   d) a 2D-instruction memory (15) containing only instructions for the processing and/or controlling of 2-dimensional representations of 3-dimensional objects, said processor (10), when executing these instructions, having access to a 2D-read/write memory (16) which contains the geometrical specifications and related data of said two-dimensional representations of said 3-dimensional objects;

e) a 3D-instruction memory (24) containing only instructions for the processing and/or controlling of 3-dimensional representations of three-dimensional objects, said processor (10), when executing these instructions, having access to a 3D-read/write memory (27) which contains the geometrical specifications and related data of said 3-dimensional representations of said 3-dimensional objects;

f) a transformation instruction memory (21, 22), said memory (21, 22) containing instructions for transforming 2-dimensional representations of 3-dimensional objects into 3-dimensional representations of the same, and vice versa.

6. Computer aided design system according to claim 5, characterized in that said transformation instruction memory (21, 22) contains instructions for a two-dimensional topology check (22).

7. Computer aided design system according to claim 5 or claim 6, characterized in that said transformation instruction memory (21, 22) comprises a profile processor (33) which transforms a 2D geometry into a 3D geometry, and a rendering processor (32) which receives 3D geometric information, converts it in 2D views and stores it in said 2D read/write memory (16).

8. Computer aided design system according to at least one of claims 5 to 7, characterized in that said 2D read/write memory (16) is divided into at least two parts (16a, 16b), one of these parts (16a) containing only information about the 2D view the user is editing, while the other (16b) contains information about views to which the user has no write access.


**Patentansprüche**

1. Verfahren zur Erzeugung von Darstellungen dreidimensionaler Gegenstände, insbesondere von Modellen mechanischer Teile, in einem computergestützten Entwurfssystem, wobei dieses System einen Prozessor (10) umfaßt, der mit mindestens einer Benutzer-Eingabeschnittstelle (8) und einer Benutzer-Ausgabeschnittstelle (12) über geeignete Register (9, 11) verbunden ist, dadurch gekennzeichnet, daß

a) der Prozessor (10) in einer 2D-Betriebsart nur Steuerbefehle, die sich auf die zweidimensionale Geometrie eines Gegenstandes in einer bestimmten Ebene beziehen, annimmt und durchführt, während er Zugriff zu einem 2D-Lese-/Schreibspeicher (16) hat, wobei diese 2D-Betriebsart unter der Steuerung von in einem 2D-Befehlsspeicher (15) enthaltenen Befehlen ausgeführt wird,

b) jedesmal, wenn ein Steuerbefehl eingegeben wird, der sich auf die dreidimensionale Geometrie dieses Gegenstandes bezieht, während der Prozessor (10) in der 2D-Betriebsart arbeitet, die Steuerung an einen Transformations-Befehlsspeicher (21, 22) übergeben wird, worauf der Prozessor (10) die in diesem Transformations-Befehlsspeicher (21, 22) enthaltenen Befehle ausführt, die die folgenden Schritte zur Ausführung bringen:

     b1) die zweidimensionale Geometrie wird in eine entsprechende dreidimensionale Geometrie transformiert; und

     b2) die Steuerung wird danach an einen 3D-Befehlsspeicher (24) übergeben, und der Prozessor (10) führt dann die in diesem Speicher (24) enthaltenen Befehle aus, um die dreidimensionale Geometrie zu bearbeiten und/oder zu speichern, während er Zugriff zu einem 3D-Lese-/Schreibspeicher (27) hat.

2. Verfahren nach Anspruch 1, dadurch gekennzeichnet, daß jedesmal, wenn die zweidimensionale Geometrie in eine dreidimensionale Geometrie transformiert wird, die Geometrie des Gegenstandes im Hinblick auf topologische Fehler geprüft wird, vorzugsweise unter der Steuerung des Transformations-Befehlsspeichers (21, 22).

3. Verfahren nach Anspruch 1 oder 2, dadurch gekennzeichnet, daß der erzeugte Gegenstand unter der Steuerung des 3D-Befehlsspeichers (24) in seinen auf seine dreidimensionale Darstellung bezogenen Eigenschaften verändert werden kann, vorzugsweise durch Hinzufügen/Wegnehmen vorher festgelegter geometrischer Gegenstände oder durch die Durchführung Boolescher Operationen.

4. Verfahren nach wenigstens einem der vorhergehenden Ansprüche, bei dem der Benutzer eine Vielzahl von Ansichten auf der Benutzer-Ausgabeschnittstelle wählen kann, dadurch gekennzeichnet, daß alle diese Ansichten jedesmal auf den neuesten Stand gebracht werden, wenn die Steuerung an den 3D-Befehlsspeicher (24) übergeben wird oder wenn vom Benutzer ein spezieller Steuerbefehl eingegeben wird.

5. Computergestütztes Entwurfssystem mit

a) mindestens einer Benutzer-Eingabeschnittstelle (8), vorzugsweise einer Tastatur (3) und/oder einem Grafiktablett (4);

b) einem Digitalprozessor (10), der mit der Benutzer-Eingabeschnittstelle über ein Eingaberegister (9) verbunden ist;

c) mindestens einer Benutzer-Ausgabeschnittstelle (12), vorzugsweise einem Bildschirm (2) mit Grafikfähigkeit, wobei die Benutzer-Ausgabeschnittstelle mit dem Digitalprozessor über ein Ausgaberegister (11) verbunden ist;

dadurch gekennzeichnet, daß der Digitalprozessor verbunden ist mit

d) einem 2D-Befehlsspeicher (15), der nur Befehle zum Bearbeiten und/oder Steuern von zweidimensionalen Darstellungen dreidimensionaler Gegenstände enthält, wobei der Prozessor (10), wenn er diese Befehle ausführt, Zugriff auf einen 2D-Lese-/Schreibspeicher (16) hat, der die geometrischen Angaben und damit zusammenhängende Daten dieser zweidimensionalen Darstellungen dreidimensionaler Gegenstände enthält;

e) einem 3D-Befehlsspeicher (24), der nur Befehle zum Bearbeiten und/oder Steuern von dreidimensionalen Darstellungen dreidimensionaler Gegenstände enthält, wobei der Prozessor (10), wenn er diese Befehle ausführt, Zugriff auf einen 3D-Lese-/Schreibspeicher (27) hat, der die geometrischen Angaben und damit zusammenhängende Daten dieser dreidimensionalen Darstellungen dreidimensionaler Gegenstände enthält;

f) einem Transformations-Befehlsspeicher (21, 22), der Befehle zum Transformieren zweidimensionaler Darstellungen dreidimensionaler Gegenstände in dreidimensionale Darstellungen derselben und umgekehrt enthält.

6. Computergestütztes Entwurfssystem nach Anspruch 5, dadurch gekennzeichnet, daß der Transformations-Befehlsspeicher (21, 22) Befehle für eine zweidimensionalen Topologieprüfung (22) enthält.

7. Computergestütztes Entwurfssystem nach Anspruch 5 oder 6, dadurch gekennzeichnet, daß der Transformations-Befehlsspeicher (21, 22) einen Profilprozessor (33) enthält, der die zweidimensionale Geometrie in eine dreidimensionale Geometrie transformiert, sowie einen Wiedergabeprozessor (32), der dreidimensionale geometrische Informationen empfängt, in zweidimensionale Ansichten überführt und in dem 2D-Lese-/Schreibspeicher (16) abspeichert.

8. Computergestütztes Entwurfssystem nach wenigstens einem der Ansprüche 5 bis 7, dadurch gekennzeichnet, daß der 2D-Lese-/Schreibspeicher (16) aus mindestens zwei Teilen (16a, 16b) besteht, wobei einer dieser Teile (16a) nur Angaben über die zweidimensionale Ansicht, die der Benutzer editiert, enthält und der andere dieser Teile (16b) Angaben über Ansichten, die der Benutzer nicht überschreiben kann.

**Reventications**

1. Procédé pour produire des représentations d'objets tridimensionnels, en particulier des modèles de pièces mécaniques, dans un système de conception assistée par ordinateur, ledit système comprenant un processeur (10) raccordé à au moins une interface (8) d'entrée d'utilisateur (8) et une interface de sortie d'utilisateur (12), par l'intermédiaire de registres appropriés (9, 11), caractérisé en ce que

a) dans un mode bidimensionnel, le processeur (10) accepte et traite uniquement des ordres concernant la géométrie bidimensionnelle d'un objet dans un plan donné, tout en ayant accès à une mémoire de lecture/enregistrement pour 2 dimensions (16), ledit mode bidimensionnel étant mis en œuvre sous la commande des instructions contenues dans une mémoire d'instructions pour 2 dimensions (15);

b) chaque fois qu'est introduit un ordre concernant la géométrie tridimensionnelle dudit objet alors que le processeur (10) effectue un traitement dans ledit mode bidimensionnel, la commande est transférée à une mémoire d'instructions de transformation (21, 22), et le processeur (10) exécute alors les instructions contenues dans cette mémoire (21, 22) en mettant en œuvre les étapes opératoires suivantes:

b1) ladite géométrie bidimensionnelle est transformée en une géométrie tridimensionnelle correspondante; et

b2) la commande est alors transférée à une mémoire d'instructions pour 3 dimensions (24), et le processeur (10) exécute alors les instructions contenues dans cette mémoire (24) pour traiter et/ou mémoriser ladite géométrie tridimensionnelle, tout en ayant accès à une mémoire de lecture/enregistrement pour 3 dimensions (27).

2. Procédé selon la revendication 1, caractérisé en ce que la géométrie dudit objet est contrôlée, pour voir si elle présente des erreurs topologiques, chaque fois que la géométrie bidimensionnelle est transformée en une géométrie tridimensionnelle, de préférence sous la commande de ladite mémoire d'instructions de transformation (21, 22).

3. Procédé selon la revendication 1 ou 2, caractérisé en ce que, sous la commande de ladite mémoire d'instructions pour 3 dimensions (24), les caractéristiques de l'objet créé, associées à sa représentation tridimensionnelle, peuvent être modifiées, de préférence par addition/soustraction d'objets géométriques définis d'avance ou bien au moyen de l'exécution d'opérations booléennes.

4. Procédé selon au moins l'une des revendications précédentes, selon lequel l'utilisateur peut sélectionner une multiplicité de vues au niveau de ladite interface de sortie d'utilisateur, caractérisé en ce que toutes ces vues sont mises à jour chaque fois que la commande est transférée à ladite mémoire d'instructions pour 3 dimensions (24) ou qu'un ordre particulier est introduit par l'utilisateur.

5. Système de conception assisté par ordinateur comprenant:

a) au moins une interface d'entrée d'utilisateur (8), de préférence un clavier (3) et-ou une tablette à graphiques (4);

b) un processeur numérique (10) raccordé à ladite interface d'entrée d'utilisateur par l'intermédiaire d'un registre d'entrée (9);

c) au moins une interface de sortie d'utilisateur (12), de préférence un écran (2) comportant des possibilités d'affichage de graphiques, ladite interface de sortie d'utilisateur étant raccordée audit processeur numérique par l'intermédiaire d'un registre de sortie (11);

caractérisé en ce que ledit processeur numérique est raccordé à

d) une mémoire d'instructions pour 2 dimensions (15) contenant uniquement des instructions pour le traitement et/ou la commande de représentations bidimensionnelles d'objets tridimensionnels, ledit processeur (10) ayant accès, lors de l'exécution de ces instructions, à une mémoire de lecture/d'enregistrement pour 2 dimensions (16), qui contient les spécifications géométriques et les données associeés desdites représentations bidimensionnelles desdits objets tridimensionnels;

e) une mémoire d'instructions pour 3 dimensions (24) contenant uniquement des instructions pour le traitement et/ou la commande de représentations tridimensionnelles d'objets tridimensionnels, ledit processeur (10) ayant accès, lors de l'exécution de ces instructions, à une mémoire de lecture/enregistrement tridimensionnel (27), qui contient les spécifications géométriques et les données associées desdites représentations tridimensionnelles desdits objets tridimensionnels;

f) Une mémoire d'instructions de transformation (21, 22), ladite mémoire (21, 22) contenant des instructions pour transformer des représentations bidimensionnelles d'objets tridimensionnels en des représentations tridimensionnelles de ces derniers, et vice versa.

6. Système de conception assisté par ordinateur selon la revendication 5, caractérisé en ce que ladite mémoire d'instructions de transformation (21, 22) contient des instructions pour un contrôle de topologie bidimensionnelle (22).

7. Système de conception assisté par ordinateur selon la revendication 5 ou 6, caractérisé en ce que ladite mémoire d'instructions de transformaton (21, 22) comprend un processeur (33) de traitement de profils, qui transforme une géométrie bidimensionnelle en une géométrie tridimensionnelle, et un processeur de restitution (32) qui reçoit l'information géométrique pour 3 dimensions, la convertit sous la forme de vues bidimensionnelles et la mémorise dans ladite mémoire de lecture/d'enregistrement pour 2 dimensions (16).

8. Système de conception assisté par ordinateur selon au moins l'une des revendications 5 à 7, caractérisé en ce que ladite mémoire de lecture/enregistrement pour 2 dimensions (16) est subdivisée en au moins deux parties (16a, 16b), l'une de ces parties (16a) contenant uniquement une information concernant la vue bidimensionnelle, que l'utilisateur est en train d'éditer, tandis que les autres parties (16b) contiennent une information concernant des vues, auxquelles l'utilisateur n'a aucun accès en vue d'un enregistrement.

Fig. 1

Fig. 2

EP 0 248 919 B1

Fig.: 3

Fig. 4

START ~ 34

(A)

35
2D Command ?    Y

N

40
Conversion
Command ?    N

Y

42
Rendering
Instruction ?    N    Y

2D input ~ 36

Profile
Instruction ~ 43
detected

Retrieve
3D inf. ~ 47

Access & process ~ 41
3D information

2D store ~ 38

Retrieve
2D inform. ~ 44

2D store ~ 48

Update 2D ~ 39
workplane
view

2D topology ~ 45
check

Create
view ~ 49

3D store ~ 46

◯    ◯

Update 50
views

◯

51
new
instruct.
?    Y    (A)

N

END

Fig. 5

5

<u>6c</u>

Ⅵ d

53

Ⅵ e

Ⅵ f

<u>6d</u>

54

<u>6e</u>

55

<u>6f</u>

56

57

2

52

Fig. 6

EP 0 248 919 B1

Fig. 7

EP 0 248 919 B1

Fig. 8

Fig. 9

Fig. 10

EP 0 248 919 B1

Fig. 11